# EUROPÄISCHE PATENTSCHRIFT

(11) **EP 2 616 567 B1**
(45) Veröffentlichungstag und Bekanntmachung des Hinweises auf die Patenterteilung: **20.12.2017**
(21) Anmeldenummer: 11741124.9
(22) Anmeldetag: 05.08.2011
(51) Int. Cl.: C23C 4/12, C23C 4/131, C23C 4/01, C23C 4/18, B23K 9/04, B23K 101/00

(54) **THERMISCHES BESCHICHTUNGSVERFAHREN**
METHOD OF THERMAL COATING
PROCÉDÉ DE REVÊTEMENT THERMIQUE

(30) Priorität: 14.09.2010 DE 102010045314
(43) Veröffentlichungstag der Anmeldung: 24.07.2013
(73) Patentinhaber: Bayerische Motoren Werke Aktiengesellschaft, 80809 München (DE)
(72) Erfinder: BLUEMLHUBER, Wolfgang Dr., 80797 München (DE); WAGENER, Wolfram Dr., 34305 Niedenstein (DE)
(74) Vertreter: Diener, Reinhold Jürgen
(86) Internationale Anmeldenummer: PCT/EP2011/003932
(87) Internationale Veröffentlichungsnummer: WO 2012/034620

(56) Entgegenhaltungen:
- WO-A1-2010/037548
- WO-A2-2008/117332
- DE-A1- 19 637 737
- US-A- 5 714 205

## Beschreibung

Die vorliegende Erfindung betrifft ein thermisches Beschichtungsverfahren zum Aufbringen einer eine Laufflächenbeschichtung bildenden Funktionsschicht auf eine Zylinderlauffläche eines Kurbelgehäuses gemäß dem Oberbegriff des Patentanspruches 1.

Ein derartiges Beschichtungsverfahren ist aus der DE 196 37 737 A1 bekannt. Zum technischen Hintergrund der Erfindung zählen die die WO 2010/037548 A1, US 5,714,205 A sowie WO 2008/117332 A2.

Aus dem Stand der Technik bekannt sind Verfahren zur Beschichtung von Zylinderlaufflächen von Kurbelgehäusen von Verbrennungsmotoren. Durch Beschichten der Zylinderlaufbahnen soll die Standfestigkeit der Kolben und des Kurbelgehäuses erhöht und gleichzeitig der Gleitwiderstand der Kolben in den Zylindern verringert werden. Bekannt sind sogenannte PVD-, Plasma- oder andere thermische Beschichtungsverfahren, mittels derer sich ein- oder mehrlagige Schichtsysteme mit Schichtdicken zwischen 1 µm bis 5 µm bzw. Schichtdicken zwischen 1 mm und 3 mm herstellen lassen. Üblicherweise werden Schichten angestrebt, die hochverdichtet und porenarm sind, um möglichst gleichmäßige Verschleiß- und Stabilitätseigenschaften zu erreichen und um Materialspannungen in der Schicht zu minimieren.

Die Herstellung derartiger kompakt aufgebauter Schichten ist aufwändig. Üblicherweise muss im Vakuum oder in einer Inertgasatmosphäre gearbeitet werden, um eine Vorerstarrung und die Bildung von Oxiden zu verhindern. Nach der Beschichtung von Zylinderlaufflächen müssen diese üblicherweise noch nachbearbeitet werden. Üblicherweise erfolgt dies durch Honen bzw. Schleifen, was wiederum dazu führt, dass die Schichten dann sehr glatt und eben sind. Zylinderlaufflächen dürfen jedoch nicht zu glatt und eben sein. Aus diesem Grund werden die geschliffenen bzw. gehonten Zylinderlaufbahnen anschließend üblicherweise definiert aufgeraut bzw. strukturiert z.B. durch Laserhonen, Laserpunkten, Plateau-Honen oder andere Verfahren, die relativ aufwändig und teuer sind.

Aufgabe der Erfindung ist es, ein thermisches Beschichtungsverfahren anzugeben, das als Beschichtungsverfahren zum Aufbringen einer Laufflächenbeschichtung auf eine Zylinderlauffläche eines Kurbelgehäuses eines Verbrennungsmotors geeignet ist und das keinen oder nur einen vergleichsweise geringen Nachbearbeitungsaufwand erfordert.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein thermisches Beschichtungsverfahren zum Aufbringen einer Laufflächenbeschichtung auf eine Zylinderlauffläche eines Kurbelgehäuses eines Verbrennungsmotors. Die Laufflächenbeschichtung wird aus einem Beschichtungsmaterial hergestellt, das zunächst mittels einer Aufschmelzeinrichtung aufgeschmolzen wird. Das Beschichtungsmaterial kann z.B. aus einem eisenhaltigen Werkstoff bestehen, der in Drahtform oder als Pulver vorliegt. In einem kontinuierlichen Prozess wird das Beschichtungsmaterial aufgeschmolzen. Hierzu kann beispielsweise zwischen zwei oder mehreren aus Beschichtungsmaterial bestehenden Drähten ein Lichtbogen erzeugt werden, der die Drahtenden kontinuierlich abschmilzt. Das aufgeschmolzene Beschichtungsmaterial wird dann mittels eines Gasstrahls auf die zu beschichtende Werkstückoberfläche transportiert. Dabei werden winzige "Beschichtungsmaterialtröpfchen" von der Aufschmelzstelle, d.h. von den Drahtenden der Aufschmelzeinrichtung auf die Werkstückoberfläche katapultiert. Zur Beschichtung von Zylinderlaufflächen kann die Aufschmelzeinrichtung beispielsweise in der Form einer sogenannten "Drehlanze" ausgebildet sein, die drehbar in Umfangsrichtung der zu beschichtenden Zylinderlauffläche und verschieblich in Zylinderlängsrichtung ist. Durch Rotieren der Drehlanze in Zylinderumfangsrichtung und durch überlagertes axiales Verschieben der Drehlanze in Zylinderlängsrichtung kann die gesamte Lauffläche eines Zylinders gleichmäßig beschichtet werden.

Der Kern der Erfindung besteht darin, dass die Beschichtungsmaterialtröpfchen während ihres Transports von der Aufschmelzstelle zur Werkstückoberfläche schockgefroren werden. Im Unterschied zu den aus dem Stand der Technik bekannten Beschichtungsverfahren wird also mit Beschichtungsmaterialtröpfchen gearbeitet, die in definierter Weise vorerstarrt bzw. erstarrt sind. Die Beschleunigung der Beschichtungsmaterialtröpfchen auf die zu beschichtende Werkstückoberfläche erfolgt in einer Kältekammer, beispielsweise mit einem definiert vorgekühlten Gasstrahl. Die Kältekammer hat eine Temperatur im Bereich zwischen - 40°C und +5°C. Vorzugsweise hat die Kältekammer eine Temperatur von etwa -20°C.

Die Beschichtung bzw. Funktionsschicht besteht somit aus einer Vielzahl vorerstarrter bzw. im Flug erstarrter Beschichtungsmaterialtröpfchen, d.h. aus einer Kombination aus flüssigen oder zähflüssige deformierten Tropfen (auch Fladen oder Lamellen genannt) und vorerstarrten, globulitischen Tropfen, die nach einem Honen der Funktionsschicht eine Tiefe von 0,5mm oder mehr haben und "runde" Öltaschen" erzeugen.

Arbeitet man mit vorerstarrten Beschichtungsmaterialtröpfchen, so lassen sich relativ dicke, definiert poröse, lamellenartige Beschichtungen herstellen, die sehr gut als Zylinderlaufflächen geeignet sind.

Nach einer Weiterbildung der Erfindung werden die Beschichtungsmaterialtröpfchen während ihres Transports von der Aufschmelzstelle zur Werkstückoberfläche so stark gekühlt, dass sie in einem oberflächennahen Bereich erstarren. Dabei erstarrt die äußere Tröpfchenschale der Beschichtungsmaterialtröpfchen, wohingegen das Beschichtungsmaterial im Tröpcheninneren noch flüssig ist. Die Beschichtungsmaterialtröpfchen werden so stark gekühlt, dass 2 % bis 15 %, vorzugsweise etwa oder genau 10% des Volumens der Beschichtungsmaterialtröpfchen während der "Flugzeit" von der Aufschmelzstelle zur Werkstückoberfläche vorerstarren.

Versuche haben gezeigt, dass zwischen der die Beschichtungsmaterialtröpfchen umgebenden "Atmosphäre" und der Liquidustemperatur des Beschichtungsmaterials eine Temperaturdifferenz von mindestens 300 K bestehen sollte. Unter der "Liquidustemperatur" versteht man die Temperatur, ab deren Unterschreitung flüssiges Beschichtungsmaterial zu erstarren beginnt. Vorzugsweise sollte die Differenz der Temperatur der aufgeschmolzenen Beschichtungsmaterialtröpfchen an der Aufschmelzstelle, d.h. an den Drahtenden, und der umgebenden Atmosphäre, d.h. der Temperatur des Gasstroms bzw. der Kältekammer, mindestens 300K betragen.

Um die gewünschte Vorerstarrung der oberfächennahen Bereiche der Beschichtungsmaterialtröpfchen zu erreichen, sollte die "Flugzeit" der Beschichtungsmaterialtröpfchen, d.h. die Zeitdauer, die die Beschichtungsmaterialtröpfchen von der Aufschmelzstelle bis zur Werkstückoberfläche benötigen, mindestens 0,2 Sekunden betragen, vorzugsweise 0,5 Sekunden. Gute Ergebnisse lassen sich erreichen, wenn der Abstand zwischen der Aufschmelzstelle und der zu beschichtenden Werkstückoberfläche in einem Bereich zwischen 5mm und 200mm liegt. In Versuchen hat sich ein Abstand von ca. 4 cm als Vorteilhaft erwiesen. Arbeitet man mit derart vorerstarrten Beschichtungsmaterialtröpfchen, so werden diese beim Auftreffen auf die Werkstückoberfläche infolge ihrer kinetischen Energie Tröpfchen für Tröpfchen deformiert und aneinandergereiht, ohne aber mit den benachbarten Tröpfchen zu verschmelzen. Im Ergebnis entsteht dadurch eine Schicht, die von feinen Lamellen und Rissen definierter Größe und Dimension durchzogen ist.

Der Vorteil einer derart "amorphen" Beschichtung besteht darin, dass sich bei einer nachträglichen Oberflächenbearbeitung der Beschichtung eine definierte Anzahl vorerstarrter Tropfen aus der Schicht herauslöst, wodurch sich eine Oberflächentopographie mit einer Vielzahl von Hinterschnitten und relativ "tiefen" Öltaschen (Tiefe der Öltaschen größer als 0,5mm) ergibt, was bei einer Anwendung als Lauffläche für einen Kolben eines Verbrennungsmotors von Vorteil ist. In den Hinterschnitten bzw. Taschen kann sich nämlich Schmieröl ansammeln. Beim Betrieb des Verbrennungsmotors führt dies dann zur Ausbildung eines gleichmäßigen Schmierfilms zwischen den Kolbenringen und der Zylinderlauffläche.

Im Folgenden wird die Erfindung im Zusammenhang mit der Zeichnung näher erläutert. Es zeigen:
- Figur 1: eine schematische Darstellung einer thermischen Beschichtungseinrichtung gemäß der Erfindung;
- Figuren 2a, 2b: Schnittbilder einer beschichteten Zylinderlauffläche in unterschiedlichen Maßstäben; und
- Figuren 2c, 2d: Schliffbilder entlang der in Figur 2b gezeigten Schnittlinie A-A, durch die in den Figuren 2a bzw. 2b gezeigten Schnittdarstellungen.

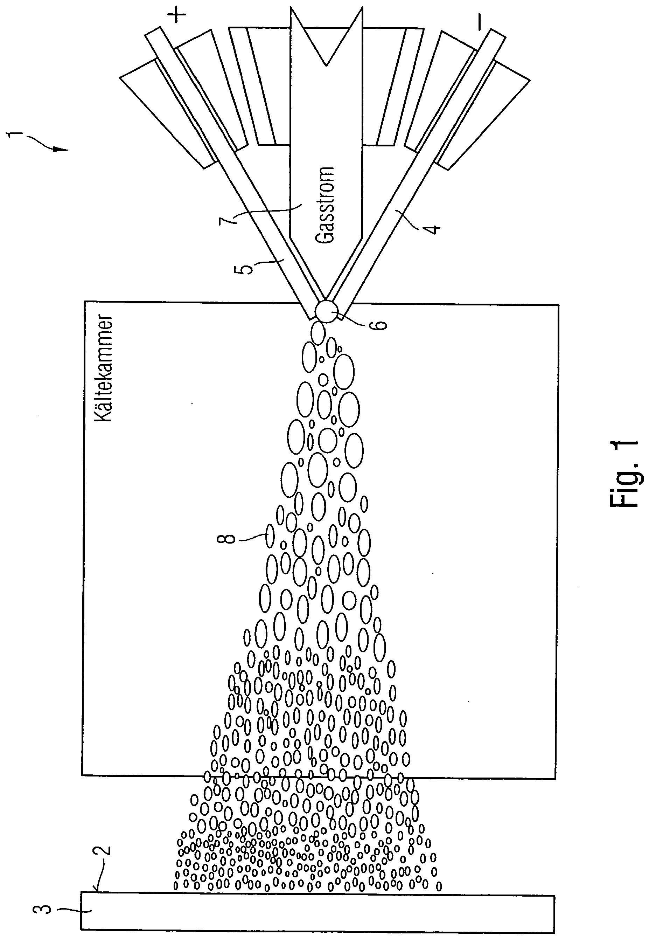

Figur 1 zeigt in schematischer Darstellung eine thermische Beschichtungsvorrichtung 1, die zur Beschichtung einer Zylinderlauffläche 2 eines Kurbelgehäuses 3 eines hier nicht näher dargestellten Verbrennungsmotors eingesetzt wird. Die Beschichtungsvorrichtung 1 weist zwei Drahtelektroden 4, 5 auf, zwischen denen ein Lichtbogen 6 erzeugt wird. Die beiden Drahtelektroden 4, 5 bestehen aus einem Beschichtungsmaterial, z.B. auf Eisenbasis.

Die Drahtelektroden 4, 5 werden im Bereich des Lichtbogens 6 aufgeschmolzen. Mittels eines Gasstroms 7 werden feinste Beschichtungsmaterialtröpfchen 8 auf die Werkstückoberfläche 2 katapultiert. Die Beschichtungsvorrichtung 1 kann als sogenannte "Drehlanze" ausgebildet sein, die in Zylinderumfangsrichtung rotierbar und in Zylinderlängsrichtung axial verfahrbar ist, wodurch die Zylinderinnenseite gleichmäßig beschichtet werden kann.

Gemäß der Erfindung sind die Beschichtungsmaterialtröpfchen von einer "Kühlatmosphäre" umgeben. Eine Kühlatmosphäre wird dadurch erreicht, dass die Beschichtung in einer Kältekammer durchgeführt wird. Ergänzend dazu kann auch mit einem Kaltgasstrom 7 gearbeitet werden. Wesentlich ist, dass die Beschichtungsmaterialtröpfchen 8 während ihres Transports von der Aufschmelzstelle, d.h. vom Bereich der Drahtenden bzw. des Lichtbogens 6 zur Werkstückoberfläche 2, gekühlt werden und oberflächlich zumindest geringfügig vorerstarren.

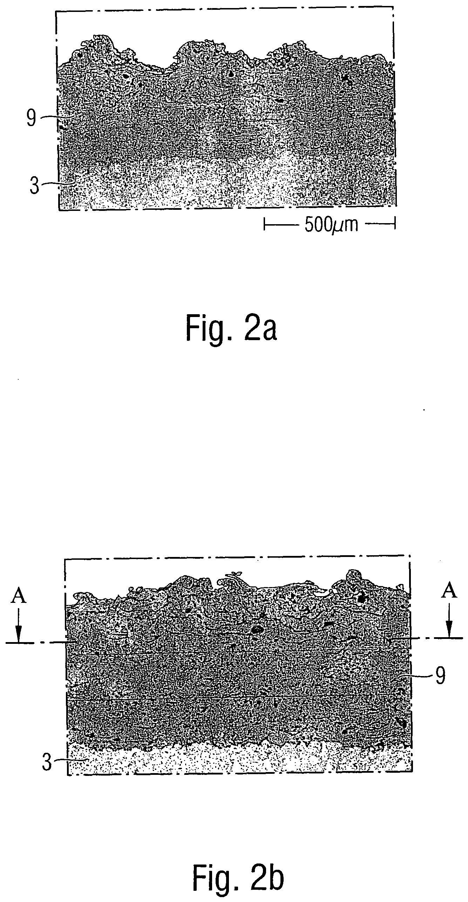

Um eine hinreichende oberflächliche Vorerstarrung zu erreichen, sollte die Differenz der Temperatur der aufgeschmolzenen Beschichtungsmaterialtröpfchen 8 im Bereich des Lichtbogens 6 und der Temperatur des Gasstroms 7 bei mindestens 300K liegen. Anders ausgedrückt sollte die (Ausblas-)Temperatur des Gasstroms 7 mindestens 300K unterhalb der Liquidustemperatur des Beschichtungsmaterials liegen. Arbeitet man mit derart vorerstarrten Beschichtungsmaterialtröpfchen, so werden diese beim Auftreffen auf die Werkstückoberfläche 2 aufgrund ihrer kinetischen Energie deformiert, ohne dabei miteinander zu verschmelzen. Bildlich gesprochen wird also ein deformiertes Beschichtungsmaterialtröpfchen an das andere "geklatscht". Wie aus den Figuren 2a, 2b ersichtlich ist, ergibt sich somit auf dem zu beschichtenden Werkstück 3 eine relativ poröse, von Lamellen, Rissen und Einschlüssen durchzogene Funktionsschicht 9. Die Figuren 2a, 2b zeigen beschichtete Zylinderwandungen in einem Zylinderlängsschnitt.

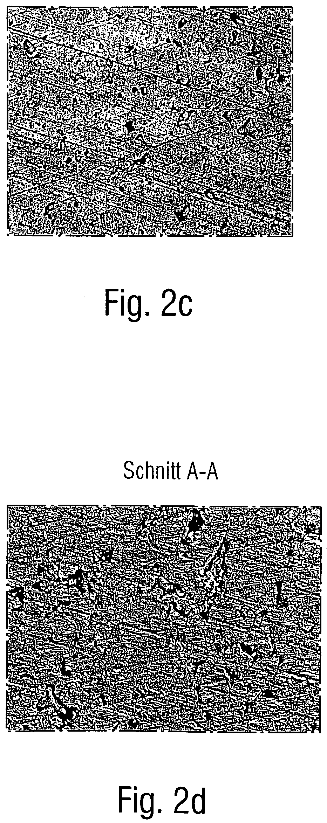

Die Figuren 2c, 2d zeigen jeweils in unterschiedlichen Maßstäben Schnittdarstellungen entlang der Schnittlinie A-A (vgl. Figur 2b). Sehr deutlich zu erkennen sind (insbesondere in Figur 2d) eine Vielzahl von Einschlüssen bzw. Hinterschneidungen, die bei einer Anwendung als Zylinderlauffläche als Öltaschen fungieren, in denen sich Schmieröl ansammeln kann. Dadurch wird im Betrieb des Verbrennungsmotors eine sehr gute und gleichmäßige Schmierung zwischen den Kolbenringen und den Zylinderlaufflächen erreicht.

## Patentansprüche

1. Thermisches Beschichtungsverfahren zum Aufbringen einer eine Laufflächenbeschichtung bildenden Funktionsschicht (9) auf eine Zylinderlauffläche (2) eines Kurbelgehäuses eines Verbrennungsmotors,
mit folgenden Schritten:
- Aufschmelzen von Beschichtungsmaterial mittels einer Aufschmelzeinrichtung (1),
- Aufbringen von Beschichtungsmaterialtröpfchen (8) auf die Zylinderlauffläche (2) mittels eines auf die Zylinderlauffläche (2) gerichteten Gasstrahls (7), welcher Beschichtungsmaterialtröpfchen (8) von einer Aufschmelzstelle (6) der Aufschmelzeinrichtung (1) auf die Zylinderlauffläche (2) bläst, wobei
die Beschichtungsmaterialtröpfchen (8) während ihres Transports von der Aufschmelzstelle (6) zur Zylinderlauffläche (2) gekühlt werden,
**dadurch gekennzeichnet, dass**
die Beschichtungsmaterialtröpfchen (8) während ihres Transports von der Aufschmelzstelle (6) zur Zylinderlauffläche (2) so stark gekühlt werden, dass sie schockgefrieren, derart, dass sie beim Auftreffen auf die Zylinderlauffläche (2) zumindest vorerstarrt oder erstarrt sind, wobei
im Bereich zwischen der Aufschmelzstelle (6) und der Zylinderlauffläche (2) eine die Beschichtungsmaterialtröpfchen (8) umgebende, kühlende Atmosphäre erzeugt wird, wobei
die kühlende Atmosphäre dadurch erzeugt wird, dass die Beschichtung in einer Kältekammer erfolgt, die eine Temperatur

2. Thermisches Beschichtungsverfahren nach Anspruch 1,
**dadurch gekennzeichnet, dass** mindestens 2 % bis 15 % des Volumens der Beschichtungsmaterialtröpfchen (8) während ihres Transports von der Aufschmelzstelle (6) zur Zylinderlauffläche (2) erstarren.

3. Thermisches Beschichtungsverfahren nach einem der Ansprüche 1 oder 2,
**dadurch gekennzeichnet, dass** die kühlende Atmosphäre dadurch erzeugt wird, dass mit einem entsprechend gekühlten Gasstrahl (7) gearbeitet wird.

4. Thermisches Beschichtungsverfahren nach einem der Ansprüche 1 bis 3,
**dadurch gekennzeichnet, dass** es sich bei dem Gasstrahl um einen Druckluftstrahl oder um einen Stickstoffstrahl handelt.

5. Thermisches Beschichtungsverfahren nach einem der Ansprüche 1 bis 4,
**dadurch gekennzeichnet, dass** zwischen der kühlenden Atmosphäre und der Liquidustemperatur des Beschichtungsmaterials eine Temperaturdifferenz von mindestens 300K besteht.

6. Thermisches Beschichtungsverfahren nach einem der Ansprüche 1 bis 5,
**dadurch gekennzeichnet, dass** die Flugzeit der Beschichtungsmaterialtröpfchen von der Aufschmelzstelle (6) zur Zylinderlauffläche (2) mindestens 0,2 Sekunden, insbesondere 0,5 Sekunden beträgt.

7. Thermisches Beschichtungsverfahren nach einem der Ansprüche 1 bis 6,
**dadurch gekennzeichnet, dass** die Distanz zwischen der Aufschmelzstelle (6) und der zu beschichtenden Zylinderlauffläche (2) ca. 5 cm beträgt.

8. Thermisches Beschichtungsverfahren nach einem der Ansprüche 2 bis 7, **dadurch gekennzeichnet, dass** 10% des Volumens der Beschichtungsmaterialtröpfchen (8) während ihres Transports von der Aufschmelzstelle (6) zur Zylinderlauffläche (2) erstarren.

9. Thermisches Beschichtungsverfahren nach einem der Ansprüche 1 bis 8, **dadurch gekennzeichnet, dass** die Beschichtung in einer Kältekammer erfolgt, die eine Temperatur von ca. -20°C besitzt.

## Claims

1. A thermal coating method for applying a functional layer (9) forming a running-surface coating to a cylinder running surface (2) of a crankcase of an internal combustion engine,
having the following steps:
- melting coating material by means of a melting device (1),
- applying coating material droplets (8) to the cylinder running surface (2) by means of a gas jet (7) directed onto the cylinder running surface (2), which blows coating material droplets (8) from a melting location (6) of the melting device (1) onto the cylinder running surface (2),
wherein
the coating material droplets (8) are cooled during their transport from the melting location (6) to the cylinder running surface (2),
**characterised in that**
the coating material droplets (8) are cooled so greatly during their transport from the melting location (6) to the cylinder running surface (2) that they shock-freeze, such that upon striking the cylinder running surface (2) they are at least pre-solidified or solidified, wherein
a cooling atmosphere surrounding the coating material droplets (8) is generated in the region between the melting location (6) and the cylinder running surface (2),
wherein
the cooling atmosphere is generated **in that** the coating takes place in a refrigerating chamber which has a temperature in the range between -40°C and +5°C.

2. A thermal coating method according to Claim 1,
**characterised in that** at least 2% to 15% of the volume of the coating material droplets (8) solidify during their transport from the melting location (6) to the cylinder running surface (2).

3. A thermal coating method according to one of Claims 1 or 2, **characterised in that** the cooling atmosphere is generated **in that** operation is with a correspondingly cooled gas jet (7).

4. A thermal coating method according to one of Claims 1 to 3, **characterised in that** the gas jet is a compressed-air jet or a nitrogen jet.

5. A thermal coating method according to one of Claims 1 to 4, **characterised in that** there is a temperature difference of at least 300K between the cooling atmosphere and the liquidus temperature of the coating material.

6. A thermal coating method according to one of Claims 1 to 5, **characterised in that** the travel time of the coating material droplets from the melting location (6) to the cylinder running surface (2) is at least 0.2 seconds, especially 0.5 seconds.

7. A thermal coating method according to one of Claims 1 to 6, **characterised in that** the distance between the melting location (6) and the cylinder running surface (2) which is to be coated is approx. 5 cm.

8. A thermal coating method according to one of Claims 2 to 7, **characterised in that** 10% of the volume of the coating material droplets (8) solidifies during their transport from the melting location (6) to the cylinder running surface (2).

9. A thermal coating method according to one of Claims 1 to 8, **characterised in that** the coating takes place in a refrigerating chamber which is at a temperature of approx. -20°C.

## Revendications

1. Procédé de revêtement thermique permettant d'appliquer une couche fonctionnelle (9) formant un revêtement de surface de roulement sur une surface de roulement cylindrique (2) du carter moteur d'un moteur à combustion interne comprenant les étapes suivantes consistant à :
- fondre un matériau de revêtement au moyen d'un dispositif de fusion (1),
- appliquer des gouttelettes de matériau de revêtement (8) sur la surface de roulement cylindrique (2) au moyen d'un jet de gaz (7) orienté sur la surface de roulement cylindrique (2) et qui souffle des gouttelettes de matériau de revêtement (8) à partir d'un emplacement de fusion (6) du dispositif de fusion (1) sur la surface de roulement cylindrique (2),
les gouttelettes de matériau de revêtement (8) étant refroidies au cours de leur transport de l'emplacement de fusion (6) vers la surface de roulement cylindrique (2),
**caractérisé en ce que**
pendant leur transport entre l'emplacement de fusion (8) et la surface de roulement cylindrique (2) les gouttelettes de matériau de revêtement (6) sont refroidies avec une intensité telle qu'elles soient soumises à une congélation ultrarapide pour que lors de leur impact sur la surface de roulement cylindrique (2) elles soient au moins préalablement durcies ou durcies,
dans la zone située entre l'emplacement de fusion (6) et la surface de roulement cylindrique (2) une atmosphère de refroidissement entourant les gouttelettes de matériau de revêtement (8) étant produite, l'atmosphère de refroidissement étant produite de sorte que le revêtement soit effectué dans une chambre froide ayant une température située dans une plage comprise entre -40°C et + 5°C.

2. Procédé de revêtement thermique conforme à la revendication 1, **caractérisé en ce qu'**
au moins 2% à 15% du volume des gouttelettes de matériau de revêtement (8) se solidifie pendant le transport entre l'emplacement de fusion (6) et la surface de roulement cylindrique (2).

3. Procédé de revêtement thermique conforme à l'une des revendications 1 et 2,
**caractérisé en ce que**
l'atmosphère de refroidissement est produite en travaillant avec un jet de gaz (7) refroidi en conséquence.

4. Procédé de revêtement thermique conforme à l'une des revendications 1 à 3,
**caractérisé en ce que**
le jet de gaz est un jet d'air comprimé ou un jet d'azote.

5. Procédé de revêtement thermique conforme à l'une des revendications 1 à 4,
**caractérisé en ce qu'**
entre l'atmosphère de refroidissement et la température de liquidus du matériau de revêtement il y a une différence de température d'au moins 300K.

6. Procédé de revêtement thermique conforme à l'une des revendications 1 à 5,
**caractérisé en ce que**
la durée de vol des gouttelettes de matériau de revêtement entre l'emplacement de fusion (6) et la surface de roulement cylindrique (2) est d'au moins 0,2 seconde et en particulier de 0,5 seconde.

7. Procédé de revêtement thermique conforme à l'une des revendications 1 à 6,
**caractérisé en ce que**
la distance entre l'emplacement de fusion (6) et la surface de roulement cylindrique à revêtir (2) est d'environ 5 cm.

8. Procédé de revêtement thermique conforme à l'une des revendications 2 à 7, **caractérisé en ce que**
10% du volume des gouttelettes de matériau de revêtement (8) se solidifie pendant leur transport entre l'emplacement de fusion (6) et la surface de roulement cylindrique (2).

9. Procédé de revêtement thermique conforme à l'une des revendications 1 à 8,
**caractérisé en ce que**
le revêtement est effectué dans une chambre froide ayant une température d'environ -20°C.
